# EUROPÄISCHE PATENTSCHRIFT

(11) **EP 3 880 369 B1**
(45) Veröffentlichungstag und Bekanntmachung des Hinweises auf die Patenterteilung: **03.05.2023**
(21) Anmeldenummer: 20709151.3
(22) Anmeldetag: 02.03.2020
(51) Int. Cl.: B05B 3/10

(54) **GLOCKENTELLER, ZERSTÄUBER-REINIGUNGSGERÄT UND ZUGEHÖRIGES BETRIEBSVERFAHREN**
BELL PLATE, ATOMIZER-TYPE CLEANING DEVICE, AND ASSOCIATED OPERATING METHOD
PLATEAU À CLOCHE, APPAREIL DE NETTOYAGE-PULVÉRISATEUR ET PROCÉDÉ DE FONCTIONNEMENT CORRESPONDANT

(30) Priorität: 27.03.2019 DE 102019107847
(43) Veröffentlichungstag der Anmeldung: 22.09.2021
(73) Patentinhaber: Dürr Systems AG, 74321 Bietigheim-Bissingen (DE)
(72) Erfinder: BUCK, Thomas, 74343 Sachsenheim (DE); PREUSS, Kevin, 75417 Mühlacker (DE); BAUMANN, Michael, 74223 Flein (DE); HERRE, Frank, 71739 Oberriexingen (DE); SEIZ, Bernhard, 74348 Lauffen (DE); NOLTE, Hans-Jürgen, 74354 Besigheim (DE); LUZ, Daniel, 70439 Stuttgart (DE)
(74) Vertreter: v. Bezold & Partner Patentanwälte - PartG mbB
(86) Internationale Anmeldenummer: PCT/EP2020/055384
(87) Internationale Veröffentlichungsnummer: WO 2020/193080

(56) Entgegenhaltungen:
- EP-A1- 2 868 622
- EP-A1- 3 017 875
- EP-A1- 3 320 981
- EP-A2- 0 951 942
- WO-A1-2013/120702
- WO-A1-2018/020755
- WO-A1-2018/020832
- DE-A1- 10 110 098

## Beschreibung

Die Erfindung betrifft einen Glockenteller für einen Rotationszerstäuber zur Applikation eines Beschichtungsmittels, insbesondere zur Lackierung von Kraftfahrzeugkarosseriebauteilen in einer Lackieranlage. Weiterhin betrifft die Erfindung einen Rotationszerstäuber mit einem solchen erfindungsgemäßen Glockenteller und einen Lackierroboter mit einem erfindungsgemäßen Rotationszerstäuber. Darüber hinaus umfasst die Erfindung ein entsprechendes Betriebsverfahren.

In modernen Lackieranlagen zur Lackierung von Kraftfahrzeugkarosseriebauteilen werden zur Lackierung üblicherweise Rotationszerstäuber eingesetzt, die einen im Betrieb rotierenden Glockenteller aufweisen, der den Lack zerstäubt.

Aus WO 2018/020755 A1 ist es weiterhin bekannt, derartige Glockenteller mit einem Transponder auszustatten, der drahtlos auslesbar ist und eine Identifikationskennung enthält. Dies ermöglicht eine Identifikation der in einer Lackieranlage verwendeten Glockenteller durch ein drahtloses Auslesen der in die Glockenteller integrierten Transponder. Der Transponder ist hierbei an der Rückseite des Glockentellers im Bereich des Montageschafts des Glockentellers angeordnet. Im Betrieb hat sich jedoch gezeigt, dass das Auslesen des Transponders bei dieser Bauart schwierig und unzuverlässig ist.

Zum technischen Hintergrund der Erfindung ist auch hinzuweisen auf DE 10 2014 017 895 A1, DE 10 2015 000 709 A1, EP 3 320 981 A1, WO 2013/120702 A1, EP 2 688 622 A1 und DE 10 2014 006 647 A1.

Der Erfindung liegt deshalb die Aufgabe zugrunde, einen entsprechend verbesserten Glockenteller zu schaffen. Weiterhin liegt der Erfindung auch die Aufgabe zugrunde, ein entsprechendes Betriebsverfahren anzugeben.

Diese Aufgaben werden durch einen Glockenteller bzw. ein Betriebsverfahren gemäß den nebengeordneten Ansprüchen gelöst.

Die Erfindung beruht auf der technisch physikalischen Erkenntnis, dass das Auslesen des Transponders bei dem eingangs beschriebenen bekannten Glockenteller gemäß WO 2018/020755 A1 dadurch behindert wird, dass der metallische Grundkörper des Glockentellers eine elektromagnetische Abschirmung für den an der Rückseite des Glockentellers angebrachten Transponder bildet. Die Erfindung sieht deshalb zunächst vor, dass der Transponder stirnseitig in oder an dem Grundkörper des Glockentellers angeordnet ist, so dass das metallische Material des Grundkörpers keine elektromagnetische Abschirmung bildet, da es sich hinter dem Transponder befindet. Der Trans-ponder kann deshalb von der Stirnseite des Glockentellers aus zuverlässig durch ein Transponder-Lesegerät ausgelesen werden, da sich zwischen dem Transponder-Lesegerät und dem Transponder keine metallischen Bauteile befinden, die eine elektromagnetische Abschirmung bilden können.

Alternativ besteht im Rahmen der Erfindung die Möglichkeit, dass der Transponder in die äußere Mantelfläche des Glockentellers eingelassen ist.

Hierbei ist zu erwähnen, dass der im Rahmen der Erfindung verwendete Begriff eines Glockentellers allgemein zu verstehen ist und sowohl Glockenteller im engeren Sinne als auch die scheibenförmigen Absprühkörper von sogenannten Scheibenzerstäubern umfasst.

In einem bevorzugten Ausführungsbeispiel der Erfindung weist der Grundkörper des Glockentellers eine axial verlaufende Mittelbohrung auf, um eine Farbdüse zur axialen Zuführung des zu applizierenden Beschichtungsmittels aufnehmen zu können. Darüber hinaus weist der Glockenteller vorzugsweise eine ringförmig umlaufende Absprühkante an der Vorderseite auf, an der das Beschichtungsmittel zerstäubt und abgesprüht wird. Das zu applizierende Beschichtungsmittel gelangt aus der Farbdüse in der Mittelbohrung des Grundkörpers über eine stirnseitige Überströmfläche an dem Grundkörper zu der außenliegenden Absprühkante und wird dort abgesprüht. Darüber hinaus weist der Glockenteller vorzugsweise eine Verteilerscheibe auf, die das axial und mittig zugeführte Beschichtungsmittel mindestens teilweise radial nach außen auf die Überströmfläche und zu der Absprühkante des Glockentellers ablenkt, was an sich aus dem Stand der Technik bekannt ist. Diese Verteilerscheibe ist vorzugsweise an einer Verteilerscheibenaufnahme montiert, die in dem Grundkörper befestigt ist. Beispielsweise kann diese Befestigung der Verteilerscheibe an der Verteilerscheibenaufnahme durch mehrere axial verlaufende Bolzen erfolgen, wie es an sich aus dem Stand der Technik bekannt ist.

Bei diesem an sich bekannten konstruktiven Aufbau des Glockentellers decken die Verteilerscheibe und/oder die Verteilerscheibenaufnahme den Transponder vorzugsweise stirnseitig ab, um den Transponder vor Verschmutzungen durch das Beschichtungsmittel zu schützen. Allerdings ist der Transponder hierbei vorzugsweise nicht direkt unter der Verteilerscheibe angeordnet, sondern liegt in der Nut des Glockentellers und wird mit Kunststoff umspritzt bzw. mit einem separaten Kunststoffring umschlossen. Diese Abdeckung des Transponders durch die Verteilerscheibe und/oder die Verteilerscheibenaufnahme bewirkt jedoch vorzugsweise keine elektromagnetische Abschirmung, da die Verteilerscheibe und/oder die Verteilerscheibenaufnahme vorzugsweise aus Kunststoff besteht, so dass der Auslesevorgang durch die Verteilerscheibe bzw. die Verteilerscheibenaufnahme nicht behindert wird.

Zur Unterbringung des Transponders in dem Glockenteller befindet sich in dem Grundkörper des Glockentellers vorzugsweise ein stirnseitiger Ringraum, der vorzugsweise als Ringnut ausgebildet ist, wobei der Transponder in diesem Ringraum angeordnet ist.

Der Transponder selbst weist vorzugsweise mindestens eine Antenne auf, die vorzugsweise in dem Ringraum in dem Grundkörper des Glockentellers angeordnet ist.

Die mindestens eine Antenne kann beispielsweise ringförmig geschlossen sein oder einen offenen Ring bilden. Alternativ besteht die Möglichkeit, dass die Antenne als Dipol ausgebildet ist mit einem oder zwei Schenkeln. Weiterhin kann die Antenne auch mehrere Kreissegmente aufweisen, geradlinig oder mäanderförmig sein. Ferner ist zu erwähnen, dass die Antenne induktiv oder mit elektromagnetischen Wellen arbeiten kann.

Hinsichtlich der konstruktiven Gestaltung des Transponders und der Montage in dem Glockenteller bestehen im Rahmen der Erfindung verschiedene Möglichkeiten, von denen nachfolgend zwei Varianten beschrieben werden.

In einer ersten Variante ist der Transponder mit seiner ringförmigen Antenne in einen Kunststoffring eingebettet, insbesondere eingegossen. Dieser Kunststoffring wird dann in den Ringraum (z.B. Ringnut) des Grundkörpers eingesetzt, insbesondere eingepresst. Hierbei ist zu erwähnen, dass der Kunststoffring mit dem eingebetteten Transponder vorzugsweise bezüglich seiner Symmetrieachse ausgewuchtet ist, wobei die Symmetrieachse des Kunststoffrings vorzugsweise koaxial zur Rotationsachse des Glockentellers verläuft. Dies ist bei den im Betrieb auftretenden hohen Drehzahlen des Glockentellers wichtig, damit der Transponder keine Unwucht verursacht.

In einer anderen Variante der Erfindung wird die ringförmige Antenne des Transponders dagegen in die Ringnut in dem Grundkörper des Glockentellers eingesetzt, wobei vorzugsweise ein Unterlegring untergelegt wird, der sich mindestens teilweise zwischen dem Nutboden der Ringnut und der ringförmigen Antenne des Transponders befindet. Ein Unterlegring ist insbesondere dann nicht erforderlich, wenn die Ringnut komplett mit Kunststoff vergossen ist. Anschließend wird die ringförmige Antenne dann zusammen mit dem Unterlegring in der Ringnut mit einer Vergussmasse vergossen, wobei die Vergussmasse nicht-metallisch ist, um den in die Ringnut eingesetzten Trans-ponder nicht elektromagnetisch abzuschirmen. Bei dieser Variante der Erfindung wird der Glockenteller mit dem darin vergossenen Transponder dann anschließend ausgewuchtet, wie es an sich aus dem Stand der Technik bekannt ist.

Zu dieser Erfindungsvariante ist noch zu erwähnen, dass der Unterlegring im Querschnitt vorzugsweise im Wesentlichen L-förmig ist, wobei sich ein erster Schenkel des im Querschnitt L-förmigen Unterlegrings vorzugsweise radial erstreckt und zwischen der ringförmigen Antenne des Transponders und dem Nutboden der Ringnut befindet, während sich ein zweiter Schenkel des im Querschnitt L-förmigen Unterlegrings vorzugsweise axial erstreckt und zwischen der ringförmigen Antenne und einer radial innenliegenden Nutflanke der Ringnut befindet.

In der Verteilerscheibe können noch weitere Antennen integriert werden, die durch Kopplung mit dem Transponder und dessen Antenne die Schreib-Lesereichweite deutlich erhöhen.

Es wurde bereits vorstehend kurz erwähnt, dass die Verteilerscheibenaufnahme den Transponder stirnseitig abdecken kann, um eine Verschmutzung des Transponders zu vermeiden. Hierbei ist es möglich, dass die Verteilerscheibenaufnahme die stirnseitig offene Ringnut in dem Grundkörper dichtend abschließt. Hierzu kann ein zusätzlicher Dichtring vorgesehen sein, der in einer ringförmigen Dichtungsnut in der Verteilerscheibenaufnahme angeordnet ist und dichtend an dem Grundkörper des Glockentellers anliegt. Der Transponder ist vorzugsweise in Kunststoff vergossen und die Verteilerscheibe dichtet den Transponder nicht notwendigerweise ab.

Ferner ist zu erwähnen, dass der Ringraum (z.B. Ringnut) in dem Grundkörper des Glockentellers vorzugsweise koaxial zu der Rotationsachse des Glockentellers verläuft. Dies ist vorteilhaft, da dadurch eine Unwucht des Glockentellers weitgehend verhindert wird.

Darüber hinaus ist zu erwähnen, dass die ringförmige Nut exakt kreisringförmig sein kann. Es besteht jedoch auch die Möglichkeit, dass die Ringnut nicht exakt kreisringförmig geformt und koaxial zur Rotationsachse ausgerichtet ist. Es besteht vielmehr auch die Möglichkeit, dass die Ringnut Abweichungen von der idealen Kreisringform und/oder von der exakten koaxialen Ausrichtung aufweist, was genutzt werden kann, um den Glockenteller auszuwuchten.

Zu dem Transponder ist zu erwähnen, dass es sich wahlweise um einen aktiven Transponder mit eigener Stromversorgung oder um einen passiven Transponder ohne eigene Stromversorgung handeln kann. Vorzugsweise handelt es sich bei dem Transponder um einen RFID-Transponder (RFID: Radio-Frequency Identification), der bei einer Abfrage einen Identifikationscode ausgibt, wobei der Identifikationscode vorzugsweise den Glockenteller identifiziert.

Weiterhin ist zu erwähnen, dass der Transponder wahlweise ein Nur-Lese-Transponder oder ein Schreib-Lese-Transponder sein kann. Bei einem Nur-Lese-Transponder kann der Transponder nur ausgelesen werden, d.h. es ist nicht möglich, den gespeicherten Dateninhalt des Transponders drahtlos zu ändern. Bei einem Schreib-Lese-Transponder ist dagegen möglich, den gespeicherten Dateninhalt drahtlos auszulesen und drahtlos zu ändern.

Es besteht auch die Möglichkeit, dass der Transponder mit zwei verschiedene Kommunikationsfrequenzen arbeitet, beispielsweise im UHF-Bereich (UHF: Ultra-high-frequency, d.h. im Frequenzbereich 300 MHz-3 GHz, vorzugsweise 860-920 MHz) einerseits und im NFC-Frequenzbereich (NFC: Near Field Communication) andererseits (z.B. bei 13,56 MHz).

Hierzu kann der Transponder zwei Chips aufweisen, die jeweils eine eigene Antenne haben. Dies kann auch unabhängig von der Kommunikationsfrequenz vorteilhaft sein, da die Chips dann unabhängige Informationen enthalten können.

Die Erfindung beansprucht jedoch nicht nur Schutz für den vorstehend beschriebenen Glockenteller als einzelnes Bauteil. Vielmehr beansprucht die Erfindung auch Schutz für einen kompletten Rotationszerstäuber mit einem solchen erfindungsgemäßen Glockenteller. Derartige Rotationszerstäuber weisen bekanntermaßen zahlreiche weitere Komponenten auf, die ebenfalls mit einem eigenen Transponder versehen werden können. Neben dem Glockenteller können also folgende weitere Rotationszerstäuberkomponenten teilweise oder alle einen eigenen Transponder aufweisen:
- Lenkluftring zur Abgabe eines Lenkluftstrahls auf den Sprühstrahl des Beschichtungsmittels,
- Turbine zum Antrieb des Rotationszerstäubers,
- Farbrohr,
- Hauptnadelventil, das die Beschichtungsmittelabgabe steuert,
- Gehäuse des Rotationszerstäubers,
- Anschlussflansch des Rotationszerstäubers,
- Ventilblock in dem Rotationszerstäuber,
- Ventile.

Ferner beansprucht die Erfindung auch Schutz für einen kompletten Lackierroboter mit einem solchen Rotationszerstäuber, der mindestens einen Transponder enthält. In derartigen Lackierrobotern befinden sich bekanntermaßen weitere Komponenten, die teilweise oder alle ebenfalls mit einem Transponder versehen sein können, wie beispielsweise Farbdruckregler, Dosierpumpe, Ventilblock, Ventile, Farbwechsler.

Die Anordnung des Transponders an der Stirnseite des Glockentellers ermöglicht - wie bereits vorstehend kurz erwähnt wurde - das Auslesen des Transponders von der Stirnseite des Glockentellers. Hierzu kann das Transponder-Lesegerät in ein Zerstäuber-Reinigungsgerät integriert sein, da der Rotationszerstäuber bei einem Reinigungsvorgang axial in das Zerstäuber-Reinigungsgerät eingeführt wird, was während des Einführvorganges ein Auslesen/Beschreiben des Transponders ermöglicht. Das Zerstäuber-Reinigungsgerät weist deshalb eine integrierte Antenne eines Transponder-Schreib-/Lesegeräts auf, um den Transponder des zu reinigenden Rotationszerstäubers beschreiben/auslesen zu können, wenn der Rotationszerstäuber in das Zerstäuber-Reinigungsgerät eingeführt wird.

Vorzugsweise ist die Antenne des Transponder-Lesegeräts ringförmig, insbesondere kreisringförmig, um ein rotierendes Erfassungsfeld erzeugen zu können.

Zerstäuber-Reinigungsgeräte sind grundsätzlich aus dem Stand der Technik bekannt und müssen deshalb nicht im Detail beschrieben werden. Es ist an dieser Stelle lediglich zu erwähnen, dass das Zerstäuber-Reinigungsgerät vorzugsweise eine Einführöffnung aufweist, um den zu reinigenden Rotationszerstäuber durch die Einführöffnung in das Zerstäuber-Reinigungsgerät einführen zu können. In dem Zerstäuber-Reinigungsgerät wird der Rotationszerstäuber dann durch Besprühen mit Reinigungsflüssigkeit und/oder durch Abbürsten gereinigt. Die ringförmige Antenne des Transponder-Lesegeräts umgibt dabei die Einführöffnung des Zerstäuber-Reinigungsgeräts vorzugsweise ringförmig und vorzugsweise auch koaxial.

Weiterhin ist zu erwähnen, dass das Zerstäuber-Reinigungsgerät vorzugsweise einen Deckel aufweist, in dem sich die Einführöffnung befindet. Hierbei kann die Antenne des Transponder-Schreib/Lesegeräts an dem Deckel angeordnet sein, beispielsweise an der Innenseite des Deckels oder eingebettet in den Deckel.

Es wurde bereit vorstehend kurz erwähnt, dass die Erfindung auch ein entsprechendes Betriebsverfahren für eine Lackieranlage verfolgt. Im Rahmen dieses erfindungsgemäßen Betriebsverfahrens erfolgt ein Beschreiben/Auslesen des Transponders an dem Glockenteller, Rotationszerstäuber bzw. Lackierroboter, was an sich aus dem Stand der Technik bekannt ist. Das erfindungsgemäße Betriebsverfahren zeichnet sich dadurch aus, dass der Lackierroboter den Rotationszerstäuber zum Beschreiben/Auslesen des Transponders in einer Reinigungsstellung oder aber auch vor eine Schreib/Lesestelle, die sich nicht im Bereich des Reinigungsgerätes befindet in oder an einem Zerstäuber-Reinigungsgerät positioniert, so dass der Transponder dann ausgelesen werden kann. Das Beschreiben/Auslesen des Transponders erfolgt also vorzugsweise bei einem ohnehin erforderlichen Reinigungsvorgang, so dass die Taktzeit der Lackieranlage durch den Beschreibe-/Auslesevorgang des Transponders nicht verlängert werden muss.

Während des normalen Lackiervorgangs muss der Transponder normalerweise nicht ausgelesen werden, da während des normalen Lackiervorgangs kein Wechsel des Glockentellers möglich ist. So werden die Lackierroboter üblicherweise in Lackierkabinen betrieben, die einen Begehschutz aufweisen, der im aktivierten Zustand einen Personenzugang zu der Lackierkabine verhindert und den Personenzugang zu der Lackierkabine nur im deaktivierten Zustand ermöglicht. Bei einer Deaktivierung des Begehschutzes der Lackierkabine besteht jedoch die Möglichkeit, dass Personen in die Lackierkabine eintreten und den Glockenteller auswechseln. Es ist deshalb bei einer Deaktivierung des Begehschutzes sinnvoll, dass der Transponder beschreiben/ausgelesen wird, um den Glockenteller bzw. die anderen mit einem Transponder versehenen Bauteile zu identifizieren. Dieser Auslesevorgang erfolgt vorzugsweise nach dem erneuten Aktivieren des Begehschutzes.

Weiterhin ist zu erwähnen, dass die Lackieranlage üblicherweise in verschiedenen Modi (Betriebsarten) betrieben werden kann, nämlich in einem Automatik-Modus, einem Reinigungs-Modus oder einem Wartungs-Modus. Im Automatik-Modus arbeitet der Lackierroboter automatisch und programmgesteuert und lackiert Bauteile in der Lackierkabine, beispielsweise Kraftfahrzeugkarosseriebauteile. In dem Reinigungs-Modus wird der Rotationszerstäuber dagegen gereinigt, wie vorstehend kurz beschrieben wurde. In dem Wartungs-Modus ist dagegen eine Wartung der Lackieranlage möglich. Darüber hinaus kann die Lackieranlage einen Handbetriebs-Modus aufweisen, in dem ein Handbetrieb erfolgt. Bei einem Wechsel des Modus (Betriebsart) ist es sinnvoll, den Transponder auszulesen. Dies gilt insbesondere für einen Wechsel aus dem Reinigungs-/Wartungs-/Handbetriebs-Modus in den Automatik-Modus.

Es wurde vorstehend bereits erwähnt, dass in dem Automatik-Modus der Lackieranlage üblicherweise kein Auslesevorgang erfolgen muss, da während des Automatik-Modus keine Bauteile gewechselt werden können. Allerdings wird während des Automatik-Modus vorzugsweise geprüft, ob eines der folgenden Trigger-Ereignisse eintritt:
- Aktivierung eines Not-Aus, insbesondere durch manuelles Betätigen eines Not-Aus-Schalters,
- Erfassung eines Personenzutritts in die Lackierkabine,
- Deaktivierung des Begehschutzes.

Der Transponder wird dann vorzugsweise beschrieben/ausgelesen, wenn in dem Automatik-Modus eines der vorstehend genannten Trigger-Ereignisse detektiert wurde. Dieser Beschreib-/Auslesevorgang muss allerdings nicht sofort erfolgen. Beispielsweise kann der Beschreib-/Auslesevorgang nach einem Trigger-Ereignis erfolgen, wenn die Lackieranlage das nächste Mal in den Automatik-Modus wechselt. Alternativ besteht die Möglichkeit, dass zunächst das teilweise lackierte Lackier-modul (z.B. Kotflügel der Kraftfahrzeugkarosserie) auf der Bauteiloberfläche des zu beschichtenden Bauteils fertig lackiert wird und erst dann der Transponder ausgelesen wird. Alternativ besteht auch die Möglichkeit, dass zunächst das aktuell teilweise lackierte Bauteil komplett fertig lackiert wird, bevor der Transponder dann beschrieben/ausgelesen wird.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1A: eine Querschnittsansicht eines erfindungsgemäßen Glockentellers mit einem integrierten Transponder,
- Figur 1B: eine Vergrößerung aus Figur 1A im Bereich des Transponders,
- Figur 2A: eine schematische Darstellung eines erfindungsgemäßen Transponders, der in einen Kunststoffring eingebettet ist,
- Figur 2B: eine Querschnittsansicht des Transponders gemäß Figur 2A,
- Figur 3: eine Perspektivansicht eines Zerstäuber-Reinigungsgerätes mit einer integrierten Antenne zum Auslesen des Transponders,
- Figur 4: eine Aufsicht auf eine erfindungsgemäße Lackieranlage,
- Figur 5: eine Explosionsdarstellung eines erfindungsgemäßen Rotationszerstäubers mit zahlreichen Transpondern in den verschiedenen Bauteilen,
- Figur 6: eine Perspektivansicht eines Roboterarms eines Lackierroboters mit zahlreichen Bauteilen, die mit Transpondern versehen sind,
- Fig. 7-10: Flussdiagramme zur Verdeutlichung verschiedener Varianten des erfindungsgemäßen Betriebsverfahrens,
- Fig. 11-14: verschiedene Abwandlungen des Ausführungsbeispiels gemäß Fig. 1A,
- Fig. 15-17: verschiedene Abwandlungen des Ausführungsbeispiels gemäß Fig. 2A.

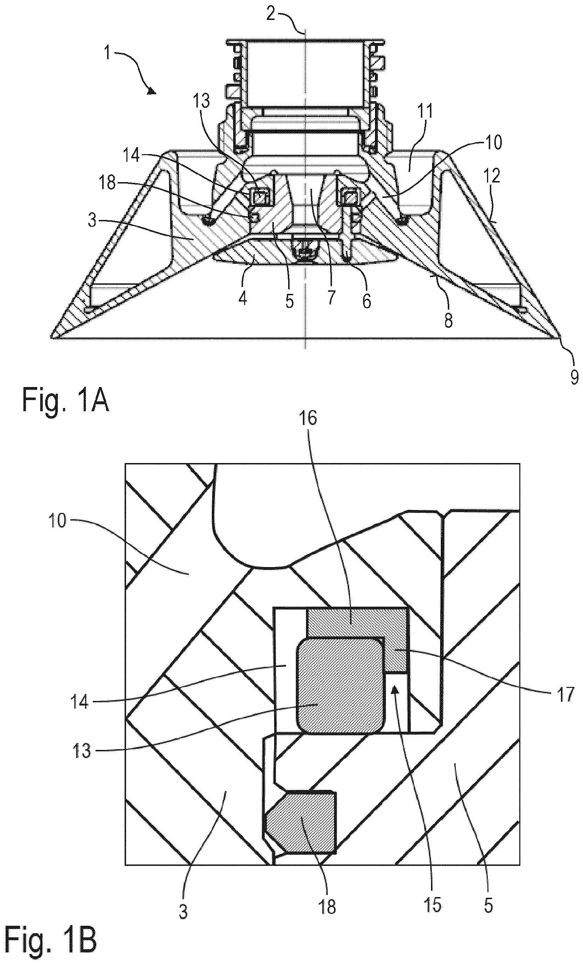

Die Figuren 1A und 1B zeigen verschiedene Ansichten eines erfindungsgemäßen Glockentellers 1, der im Betrieb an einem Rotationszerstäuber montiert ist und sich um eine Rotationsachse 2 dreht, wie es an sich aus dem Stand der Technik bekannt ist.

Der Glockenteller 1 besteht im Wesentlichen aus einem metallischen Grundkörper 3, einer Verteilerscheibe 4 und einer Verteilerscheibenaufnahme 5, wobei die Verteilerscheibe 4 durch Befestigungsbolzen 6 in herkömmlicher Weise an der Verteilerscheibenaufnahme 5 befestigt ist.

Der Grundkörper 3 des Glockentellers 1 weist eine Mittelbohrung 7 auf, die zum einen die Verteilerscheibenaufnahme 5 enthält und zum anderen zur axialen Durchführung einer hier nicht dargestellten Farbdüse dient, welche den zu applizierenden Lack axial zuführt. Der axial zugeführte Lack trifft dann auf die Verteilerscheibe 4 auf, die einen Teil des Lacks radial nach außen auf eine Überströmfläche 8 leitet, die zu einer ringförmig umlaufenden Absprühkante 9 führt. Der Lack wird dann an der Absprühkante 9 in herkömmlicher Weise abgesprüht. Ein Teil des axial durch die Mittelbohrung 7 zugeführten Lacks tritt dagegen durch eine Mittelbohrung in der Verteilerscheibe 4 axial durch die Verteilerscheibe 4 hindurch und strömt dann an der Stirnseite der Verteilerscheibe 4 radial nach außen.

Darüber hinaus weist der Glockenteller 1 in herkömmlicher Weise Außenspülkanäle 10 auf, die von der Mittelbohrung 7 in dem Glockenteller 1 ausgehen und radial außen in einen ringförmig umlaufenden Außenspülraum 11 münden, was an sich aus dem Stand der Technik bekannt ist. Bei einem Spülvorgang kann somit Spülmittel durch die Außenspülkanäle 10 in den Außenspülraum 11 gelangen, von wo das Spülmittel dann radial nach außen auf die äußere Mantelfläche 12 des Glockentellers strömt, um diese zu reinigen.

Der erfindungsgemäße Glockenteller 1 zeichnet sich dadurch aus, dass ein Transponder 13 in den Glockenteller 1 integriert ist. Hierzu weist der metallische Grundkörper 3 des Glockentellers 1 eine Ringnut 14 auf, die koaxial zu der Rotationsachse 2 des Glockentellers 1 verläuft. Die Ringnut 14 ist hierbei in dem Grundkörper 3 stirnseitig offen, damit das Auslesen des Transponders 13 durch das metallische Material des Grundkörpers 3 nicht behindert wird. Der Transponder 13 kann also zuverlässig von der Stirnseite des Glockentellers 1 aus ausgelesen werden.

In die Ringnut 14 ist ein Unterlegring 15 eingelegt, der im Querschnitt im Wesentlichen L-förmig ist und zwei Schenkel 16, 17 aufweist. Der Schenkel 16 des Unterlegrings 15 verläuft im Wesentlichen radial und liegt zwischen dem Nutboden der Ringnut 14 und dem Transponder 13. Der andere Schenkel 17 verläuft dagegen im Wesentlichen axial und liegt zwischen der radial innenliegenden Nutflanke der Ringnut 14 und dem Transponder 13.

Nach dem Einlegen des Unterlegrings 15 und des Transponders 13 in die Ringnut 14 wird die Ringnut 14 mit dem Unterlegring 15 und dem Transponder 13 mit einer Vergussmasse vergossen, wobei die Vergussmasse nicht-metallisch ist, um das Auslesen des Transponders 13 nicht zu behindern.

Im montierten Zustand deckt die Verteilerscheibenaufnahme 5 die Ringnut 14 dichtend ab, wozu ein Dichtring 18 vorgesehen ist, der in eine Ringnut in der äußeren Mantelfläche der Verteilerscheibenaufnahme 5 eingelassen ist und an dem Grundkörper 3 anliegt. Die Verteilerscheibenaufnahme 5 verhindert also zusammen mit der Verteilerscheibe 4, dass der Transponder 13 von Beschichtungsmittel verschmutzt wird.

Hierbei ist zu erwähnen, dass die Verteilerscheibenaufnahme 5 und die Verteilerscheibe 4 aus Kunststoff bestehen und deshalb das Auslesen des Transponders 13 nicht behindern, da sie keine elektromagnetische Abschirmung bilden.

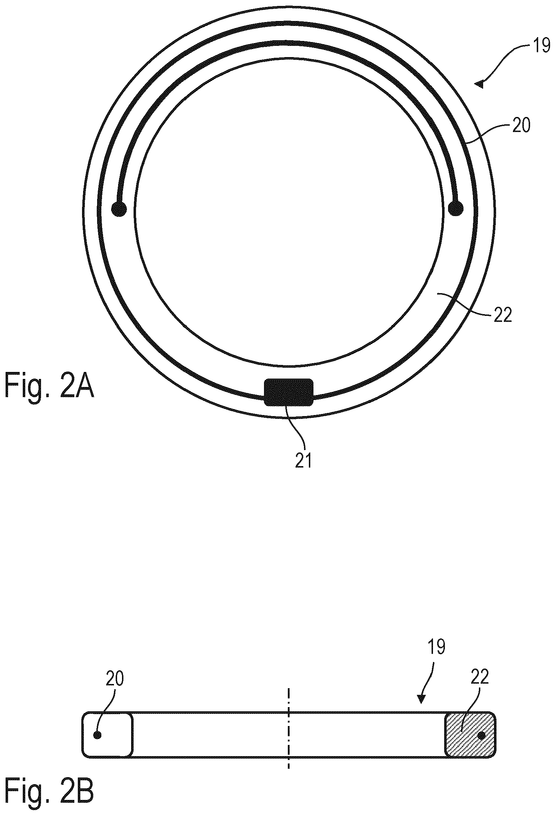

Die Figuren 2A und 2B zeigen ein alternatives Ausführungsbeispiel eines Transponders 19, der eine Antenne 20 und einen Chip 21 aufweist, die beide in einen Kunststoffring 22 eingegossen sind. Der Kunststoffring 22 kann hierbei zweiteilig ausgeführt sein, wobei ein Teil des Kunststoffrings 22 die Verteilerscheibenaufnahme 5 sein kann. Die Antenne 20 kann in einem Teil des Kunststoffrings 22 oder der Verteilerscheibenaufnahme 5 eingegossen sein. Der Chip 21 kann im zweiten Teil des Kunststoffrings 22 eingegossen sein, wobei der zweite Teil des Kunststoffrings 22 der Unterlegring 15 sein kann. Der Kunststoffring 22 oder der Unterlegring 15, der den Chip 21 beinhaltet, kann bezüglich seiner Symmetrieachse ausgewuchtet ist, so dass nach dem Einsetzen des Chips 21 am Grundkörper 3 des Glockentellers 1 ausgewuchtet und eingeordnet eingepresst wird. Der ringförmige Transponder 19 ist hierbei bezüglich seiner Symmetrieachse ausgewuchtet, so dass nach dem Einsetzen des Transponders 19 in den entsprechend geeigneten Glockenteller 1 kein erneutes Auswuchten des Glockentellers 1 erforderlich ist.

Verliert der Glockenteller 1 durch einen Defekt die Verteilerscheibenaufnahme 5, so reduziert sich die Lese-/Schreib-Reichweite des Chips 21 auf 10mm. Die reduzierte Reichweite kann durch die niedrige empfangene Signalstärke (RSSI: Received Signal Strength Indication ) erkannt werden. So kann erkannt werden, dass die Verteilerscheibe 4 defekt ist und der Glockenteller 1 nicht mehr vollständig ist.

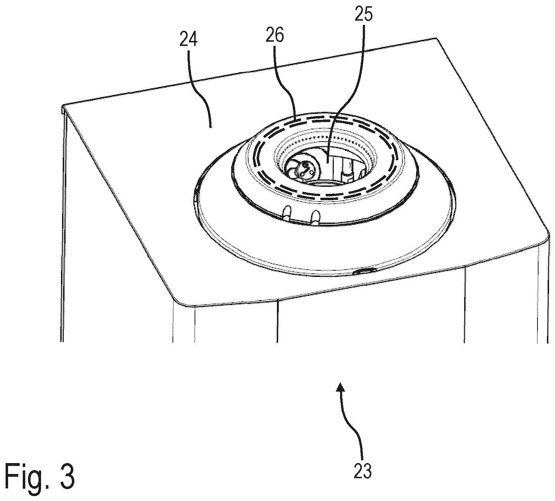

Figur 3 zeigt eine Perspektivansicht eines Zerstäuber-Reinigungsgeräts 23, das besonders angepasst ist, um den Transponder 13 des Glockentellers 1 gemäß den Figuren 1A und 1B auszulesen.

Das Zerstäuber-Reinigungsgerät 23 weist zunächst in herkömmlicher Weise einen Deckel 24 mit einer Einführöffnung 25 auf, wobei der zu reinigende Rotationszerstäuber durch die Einführöffnung 25 in das Zerstäuber-Reinigungsgerät 23 eingeführt werden kann, was an sich aus dem Stand der Technik bekannt ist.

Die Einführöffnung 25 wird hierbei von einer Antenne 26 eines Transponder-Lesegeräts umgeben, wobei die Antenne 26 ringförmig ist und ein rotierendes Erfassungsfeld erzeugen kann.

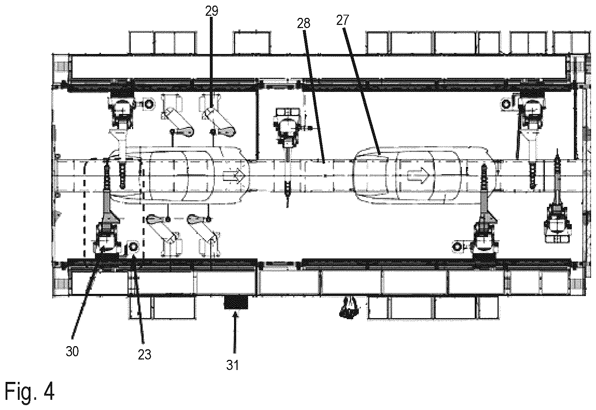

Figur 4 zeigt eine Aufsicht auf eine erfindungsgemäße Lackieranlage. Hierbei werden Kraftfahrzeugkarosserien 27 von einem Linearförderer 28 durch die Lackieranlage gefördert, was an sich aus dem Stand der Technik bekannt ist.

Beiderseits des Linearförderers 28 sind Handhabungsroboter 29 (Türöffner und Haubenöffner) angeordnet, um Türen und Hauben der Kraftfahrzeugkarosserien 27 für eine Innenlackierung zu öffnen.

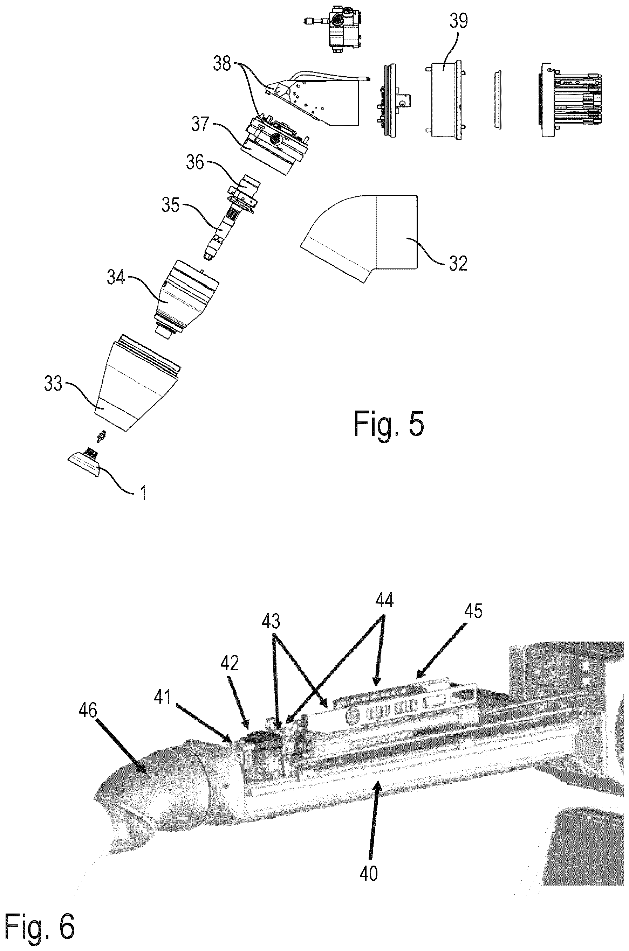

Darüber hinaus befinden sich beiderseits des Linearförderers 28 Lackierroboter 30 zum Lackieren der Kraftfahrzeugkarosserien 27 durch Rotationszerstäuber. Neben den Lackierrobotern 30 befindet sich jeweils das Zerstäuber-Reinigungsgerät 23 mit der integrierten Antenne 26 zum Auslesen des Transponders 13. Die Antenne 26 des Zerstäuber-Reinigungsgerät 23 ist hierbei mit einem Transponder-Lesegerät 31 verbunden, das außerhalb der Lackierkabine angeordnet ist, Figur 5 zeigt eine Explosionsdarstellung eines erfindungsgemäßen Rotationszerstäubers mit dem Glockenteller 1 und zahlreichen weiteren Bauteilen, die ebenfalls mit einem eigenen Transponder versehen sind, nämlich einem Gehäuse 32, einem Lenkluftring 33, einer Turbine 34, einem Farbrohr 35, einem Hauptnadelventil 36, Ventilen 37, Ventilblöcken 38 und einem Anschlussflansch 39.

Figur 6 zeigt einen distalen Roboterarm 40 eines Lackierroboters, wobei der Roboterarm 40 entsprechend der üblichen Fachterminologie auch als "Arm 2" bezeichnet wird. Der Roboterarm 40 trägt verschiedene Bauteile, nämlich einen Farbdruckregler 41, eine Dosierpumpe 42, Ventilblöcke 43, Ventile 44, einen Farbwechsler 45 und eine Roboterhandachse 46. Diese Bauteile können alle oder teilweise ebenfalls mit Transpondern versehen sein.

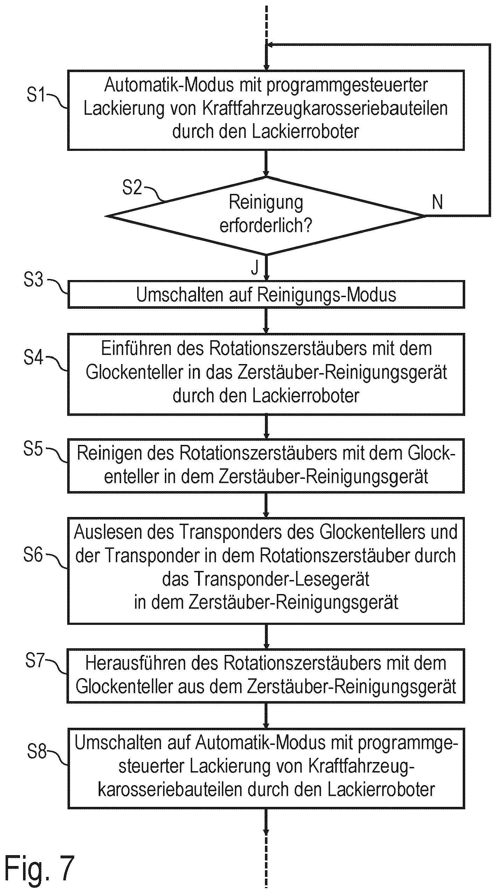

Im Folgenden wird nun das Ausführungsbeispiel gemäß Figur 7 erläutert.

Im Schritt S1 wird die Lackieranlage im Automatik-Modus mit programmgesteuerter Lackierung von Kraftfahrzeugkarosseriebauteilen betrieben.

Im Schritt S2 wird dann geprüft, ob eine Reinigung erforderlich ist.

Falls keine Reinigung erforderlich ist, so fährt die Lackieranlage mit dem Automatik-Modus in Schritt S1 fort.

Falls dagegen eine Reinigung erforderlich ist, so wird im Schritt S3 von dem Automatik-Modus in den Reinigungs-Modus umgeschaltet.

Im Schritt S4 wird der Rotationszerstäuber dann in das Zerstäuber-Reinigungsgerät eingeführt und dann in einem Schritt S5 gereinigt.

Beim Einführen des Rotationszerstäubers oder beim Herausziehen des Rotationszerstäubers kann dann der Transponder des Glockentellers in dem Schritt S6 ausgelesen werden.

Wie bei einem normalen Reinigungsvorgang wird der Rotationszerstäuber dann in Schritt S7 wieder aus dem Zerstäuber-Reinigungsgerät herausgeführt.

Schließlich kann dann in einem Schritt S8 wieder auf den Automatik-Modus umgeschaltet werden.

Das Auslesen des Transponders erfolgt also im Rahmen eines normalen Reinigungsvorgangs, so dass hierzu keine Verlängerung der Taktzeit der Lackieranlage benötigt wird.

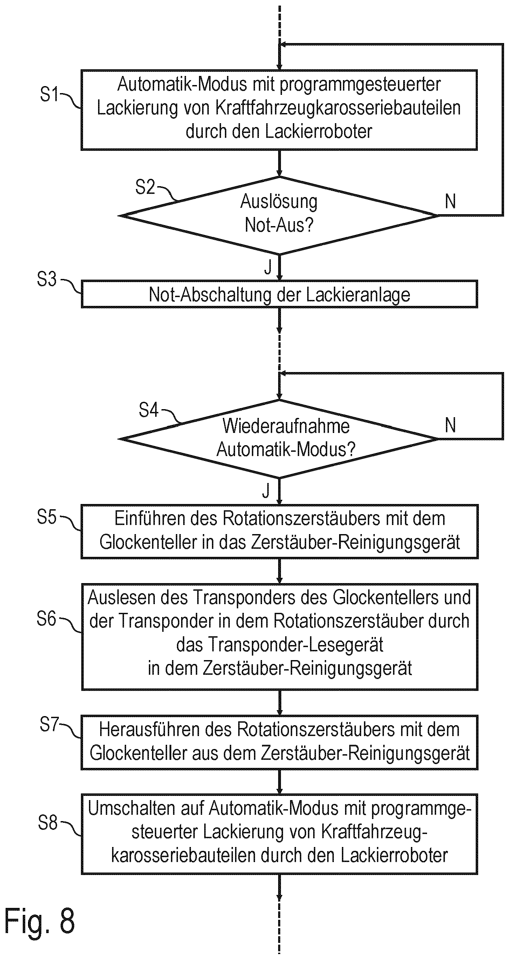

Im Folgenden wird nun das Ausführungsbeispiel gemäß Figur 8 beschrieben.

In einem Schritt S1 wird die Lackieranlage im Automatik-Modus betrieben, in dem Kraftfahrzeugkarosseriebauteile programmgesteuert und automatisch von einem Lackierroboter lackiert werden.

In einem Schritt S2 wird dann laufend überprüft, ob ein Not-Aus ausgelöst wird, beispielsweise durch manuelles Betätigen eines Not-Aus-Schalters.

Falls kein Not-Aus ausgelöst wird, so fährt die Lackieranlage im Automatik-Modus gemäß Schritt S1 fort.

Falls dagegen ein Not-Aus ausgelöst wird, so erfolgt im Schritt S3 eine Not-Abschaltung der Lackieranlage.

Anschließend wird dann im Schritt S4 geprüft, ob der Automatik-Modus wieder aufgenommen wird.

Falls dies der Fall ist, so wird der Rotationszerstäuber in dem Schritt S5 in das Zerstäuber-Reinigungsgerät eingeführt und im Schritt S6 wird der Transponder des Glockentellers ausgelesen.

Anschließend wird der Rotationszerstäuber dann in dem Schritt S7 wieder aus dem Zerstäuber-Reinigungsgerät herausgeführt und im Schritt S8 erfolgt dann wieder eine Wiederaufnahme des Automatik-Modus.

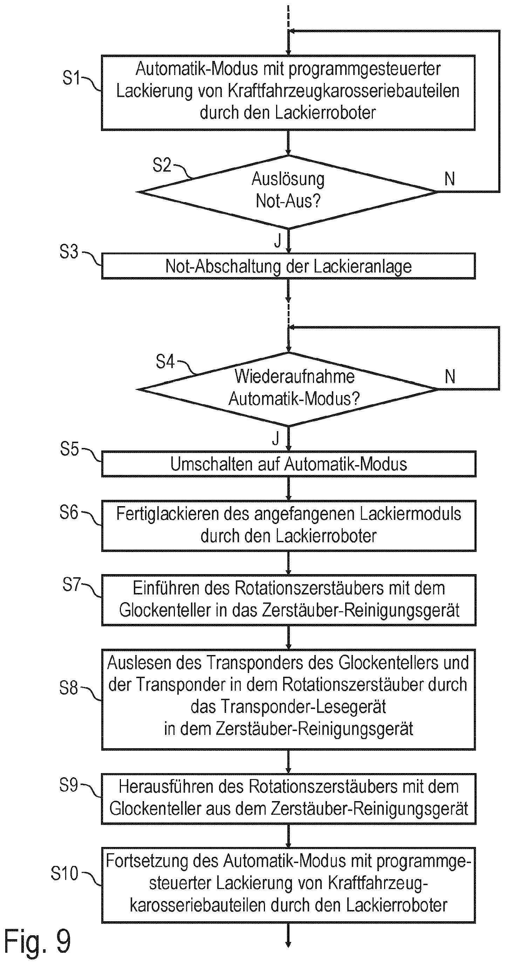

Das Ausführungsbeispiel gemäß Figur 9 stimmt weitgehend mit dem Ausführungsbeispiel gemäß Figur 8 überein, so dass zur Vermeidung von Wiederholungen auf die vorstehende Beschreibung verwiesen wird.

Eine Besonderheit dieses Ausführungsbeispiels besteht darin, dass nach der Wiederaufnahme des Automatik-Modus zunächst in einem Schritt S6 das bereits teilweise lackierte Lackier-Modul (z.B. Kotflügel) fertig lackiert wird.

Erst dann folgt in den Schritten S7-S9 das Auslesen des Transponders.

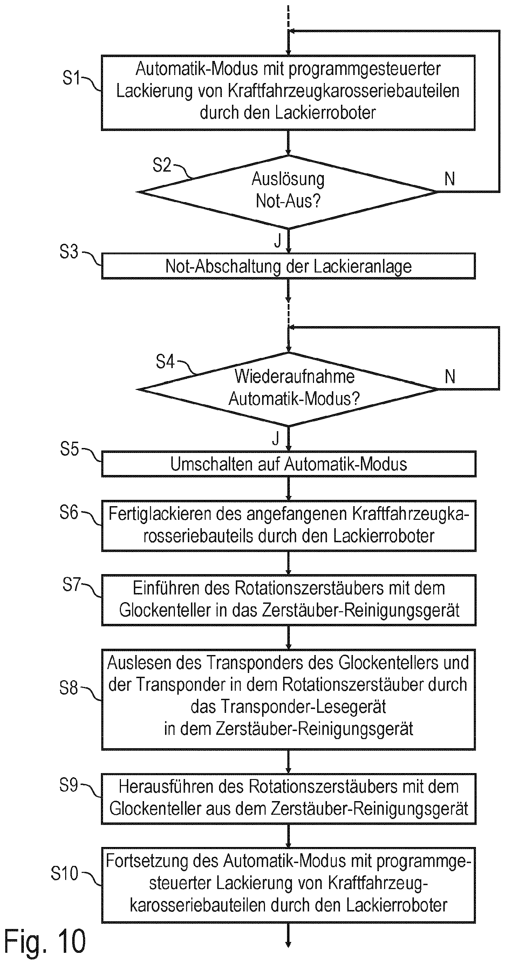

Das Ausführungsbeispiel gemäß Figur 10 stimmt ebenfalls weitgehend mit dem Ausführungsbeispiel gemäß den Figuren 8 und 9 überein, so dass zur Vermeidung von Wiederholungen auf die vorstehende Beschreibung verwiesen wird.

Eine Besonderheit dieses Ausführungsbeispiels besteht darin, dass nach der Wiederaufnahme des Automatik-Modus zunächst die komplette angefangene Kraftfahrzeugkarosserie fertig lackiert wird, bevor dann in den Schritten S7-S9 der Transponder ausgelesen wird.

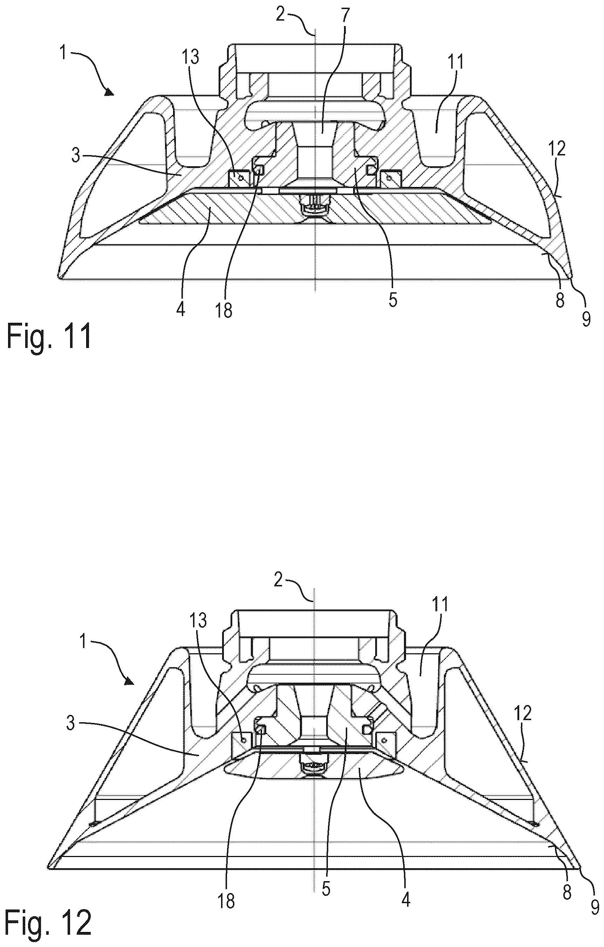

Fig. 11 zeigt ein weiteres Ausführungsbeispiel eines erfindungsgemäßen Glockentellers 1, der weitgehend mit dem Glockenteller 1 gemäß Fig. 1A übereinstimmt, so dass zur Vermeidung von Wiederholungen auf die vorstehende Beschreibung verwiesen wird, wobei für entsprechende Einzelheiten dieselben Bezugszeichen verwendet werden wie in Fig. 1A.

Eine Besonderheit dieses Ausführungsbeispiels besteht darin, dass der Transponder 13 hierbei nur von der Verteilerscheibe 4 abgedeckt wird, nicht dagegen von der Verteilerscheibenaufnahme 5. Der Transponder 13 befindet sich hierbei nämlich radial außerhalb der Verteilerscheibenaufnahme 5. Die Verteilerscheibenaufnahme 5 kann deshalb in diesem Ausführungsbeispiel auch aus einem metallischen Werkstoff gefertigt sein, da die Verteilerscheibenaufnahme 5 den Transponder 13 hierbei nicht abschirmt.

Weiterhin ist zu erwähnen, dass sich die Ringnut 14 für die Aufnahme des Transponders 13 hierbei in einem Bereich der Überströmfläche 8 befindet, der rechtwinklig zur Rotationsachse 2 ausgerichtet ist.

Eine weitere Besonderheit dieses Ausführungsbeispiels besteht darin, dass die äußere Mantelfläche 12 des Glockentellers 1 hierbei in zwei Abschnitte unterteilt ist, die in axialer Richtung aufeinanderfolgen und unterschiedliche Winkel zu der Rotationsachse 2 einschließen.

Fig. 12 zeigt ein weiteres Ausführungsbeispiel eines erfindungsgemäßen Glockentellers 1, der weitgehend mit dem Glockenteller 1 gemäß Fig. 11 übereinstimmt, so dass zur Vermeidung von Wiederholungen auf die vorstehende Beschreibung verwiesen wird, wobei für entsprechende Einzelheiten dieselben Bezugszeichen verwendet werden wie in Fig. 11.

Eine Besonderheit dieses Ausführungsbeispiels besteht darin, dass sich die Ringnut 14 für die Aufnahme des Transponders 13 hierbei in einem schräg verlaufenden Bereich der Überströmfläche 8 befindet.

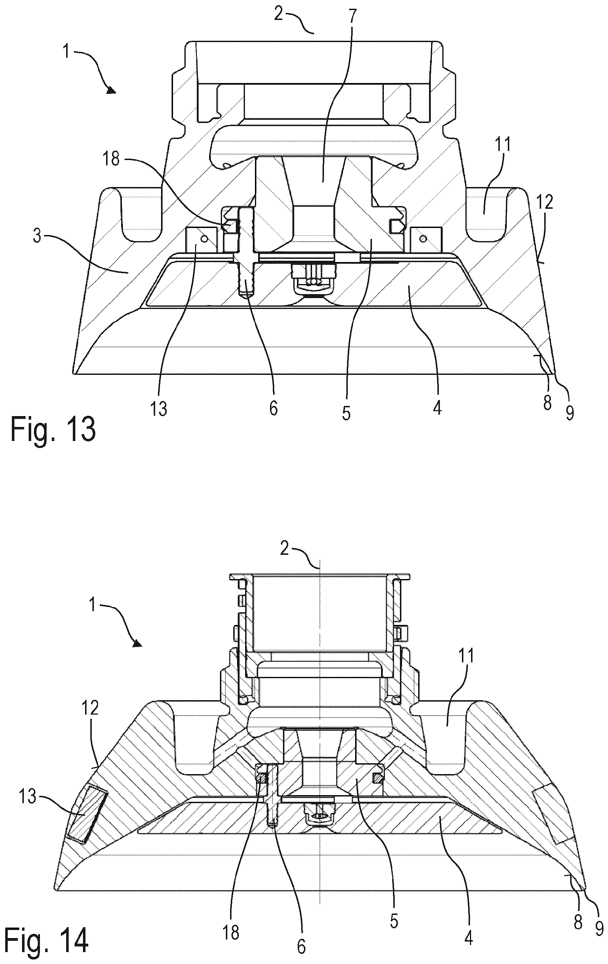

Fig. 13 zeigt ein weiteres Ausführungsbeispiel eines erfindungsgemäßen Glockentellers 1, der weitgehend mit dem Glockenteller 1 gemäß Fig. 11 übereinstimmt, so dass zur Vermeidung von Wiederholungen auf die vorstehende Beschreibung verwiesen wird, wobei für entsprechende Einzelheiten dieselben Bezugszeichen verwendet werden wie in Fig. 11.

Eine Besonderheit dieses Ausführungsbeispiels besteht darin, dass die äußere Mantelfläche 12 des Glockentellers 1 hierbei einen wesentlich kleineren Winkel mit der Rotationsachse 2 des Glockentellers 1 einschließt.

Fig. 14 zeigt ein weiteres Ausführungsbeispiel eines erfindungsgemäßen Glockentellers 1, der weitgehend mit dem Glockenteller 1 gemäß Fig. 13 übereinstimmt, so dass zur Vermeidung von Wiederholungen auf die vorstehende Beschreibung verwiesen wird, wobei für entsprechende Einzelheiten dieselben Bezugszeichen verwendet werden wie in Fig. 13.

Eine Besonderheit dieses Ausführungsbeispiels besteht darin, dass der Transponder 13 hierbei in die äußere Mantelfläche 12 des Grundkörpers 3 des Glockentellers 1 eingelassen ist.

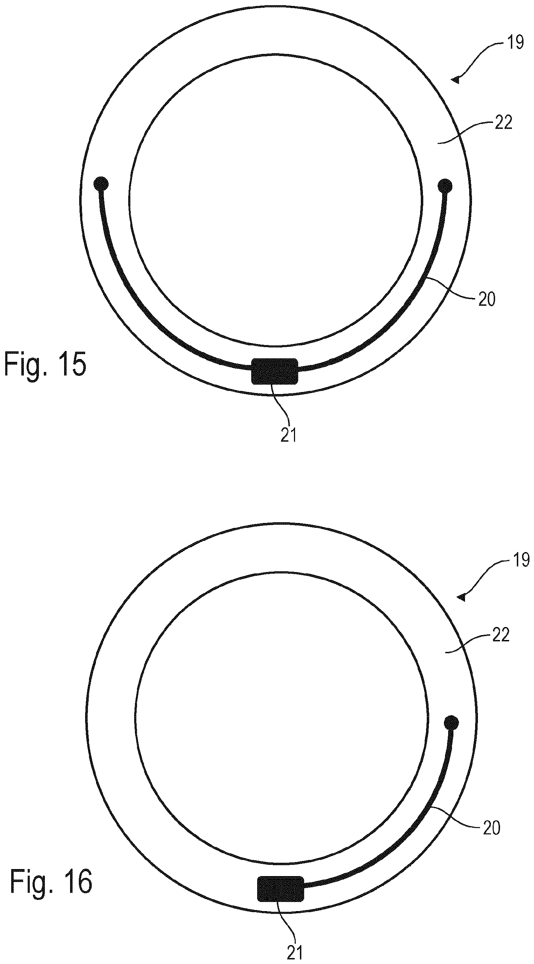

Fig. 15 zeigt ein weiteres Ausführungsbeispiel eines erfindungsgemäßen Transponders 19, wobei dieses Ausführungsbeispiel weitgehend mit dem Ausführungsbeispiel gemäß Fig. 2A übereinstimmt, so dass zur Vermeidung von Wiederholungen auf die vorstehende Beschreibung zu Fig. 2A verwiesen wird, wobei für entsprechende Einzelheiten dieselben Bezugszeichen verwendet werden.

Eine Besonderheit dieses Ausführungsbeispiels besteht darin, dass die Antenne 20 des Transponders 19 hierbei nicht ringförmig geschlossen ist, sondern als Dipol mit zwei Schenkeln ausgebildet ist.

Fig. 16 zeigt ein weiteres Ausführungsbeispiel eines erfindungsgemäßen Transponders 19, wobei dieses Ausführungsbeispiel weitgehend mit dem Ausführungsbeispiel gemäß Fig. 2A übereinstimmt, so dass zur Vermeidung von Wiederholungen auf die vorstehende Beschreibung zu Fig. 2A verwiesen wird, wobei für entsprechende Einzelheiten dieselben Bezugszeichen verwendet werden.

Eine Besonderheit dieses Ausführungsbeispiels besteht darin, dass die Antenne 20 hierbei nicht ringförmig geschlossen ist, sondern als Dipol mit einem Schenkel ausgebildet ist.

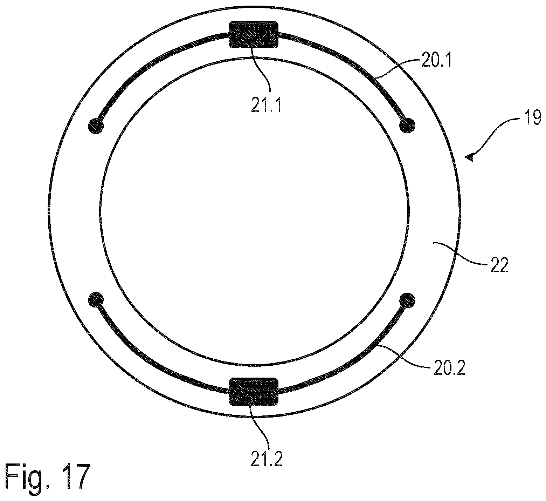

Fig. 17 zeigt ein weiteres Ausführungsbeispiel eines erfindungsgemäßen Transponders 19, wobei dieses Ausführungsbeispiel weitgehend mit dem Ausführungsbeispiel gemäß Fig. 2A übereinstimmt, so dass zur Vermeidung von Wiederholungen auf die vorstehende Beschreibung zu Fig. 2A verwiesen wird, wobei für entsprechende Einzelheiten dieselben Bezugszeichen verwendet werden.

Eine Besonderheit dieses Ausführungsbeispiels besteht darin, dass hierbei in den Kunststoffring 20 des Transponders 19 zwei Chips 21.1, 21.2 eingebettet sind, die jeweils eine Antenne 20.1, 20.2 aufweisen. Die beiden Antennen 20.1, 20.2 sind hierbei wie in Figur 14 als Dipole mit jeweils zwei Schenkeln ausgebildet.

Weiterhin ist zu erwähnen, dass die beiden Chips 21.1, 21.2 unterschiedliche Frequenzbereiche aufweisen können. Beispielsweise kann der Chip 21.1 im UHF-Bereich (UHF: Ultra-high-frequency) arbeiten (d.h. im Frequenzbereich 300 MHz-3 GHz, vorzugsweise 860-920 MHz), während der andere Chip 21.2 im NFC-Frequenzbereich (NFC: Near Field Communication) arbeitet (z.B. bei 13,56 MHz).

### Bezugszeichenliste:

- 1: Glockenteller
- 2: Rotationsachse des Glockentellers
- 3: Grundkörper des Glockentellers aus Metall
- 4: Verteilerscheibe aus Kunststoff
- 5: Verteilerscheibenaufnahme aus Kunststoff
- 6: Befestigungsbolzen zur Befestigung der Verteilerscheibe auf der Verteilerscheibenaufnahme
- 7: Mittelbohrung
- 8: Überströmfläche des Glockentellers
- 9: Absprühkante des Glockentellers
- 10: Außenspülkanal des Glockentellers
- 11: Außenspülraum des Glockentellers
- 12: Äußere Mantelfläche des Glockentellers
- 13: Transponder
- 14: Ringnut zur Aufnahme des Transponders
- 15: Unterlegring
- 16: Radialer Schenkel des Unterlegrings
- 17: Axialer Schenkel des Unterlegrings
- 18: Dichtring
- 19: Transponder
- 20: Antenne des Transponders
- 20.1, 20.2: Antennen der Chips
- 21: Chip
- 21.1, 21.2: Chips
- 22: Kunststoffring mit eingebettetem Transponder
- 23: Zerstäuber-Reinigungsgerät
- 24: Deckel des Zerstäuber-Reinigungsgeräts
- 25: Einführöffnung des Zerstäuber-Reinigungsgeräts
- 26: Antenne des Transponder-Lesegeräts
- 27: Kraftfahrzeugkarosserie
- 28: Linearförderer
- 29: Handhabungsroboter
- 30: Lackierroboter
- 31: Transponder-Lesegerät
- 32: Gehäuse des Rotationszerstäubers
- 33: Lenkluftring
- 34: Turbine
- 35: Farbrohr
- 36: Hauptnadelventil
- 37: Ventile
- 38: Ventilblöcke
- 39: Anschlussflansch
- 40: Distaler Roboterarm ("Arm 2")
- 41: Farbdruckregler
- 42: Dosierpumpe
- 43: Ventilblöcke
- 44: Ventile
- 45: Farbwechsler
- 46: Roboterhandachse

## Patentansprüche

1. Glockenteller (1) für einen Rotationszerstäuber zur Applikation eines Beschichtungsmittels, insbesondere zur Lackierung von Kraftfahrzeugkarosseriebauteilen in einer Lackieranlage, mit
a) einem Grundkörper (3), insbesondere aus Metall, und
b) einem Transponder (13; 19), der drahtlos auslesbar und in den Glockenteller (1) integriert ist, **dadurch gekennzeichnet,**
c) **dass** der Transponder (13; 19) stirnseitig in dem Grundkörper (3) angeordnet oder in die äußere Mantelfläche (12) des Glockentellers (1) eingelassen ist.

2. Glockenteller (1) nach Anspruch 1, **gekennzeichnet durch**
a) eine axial verlaufende Mittelbohrung (7) in dem Grundkörper (3) zur Durchführung einer Farbdüse zur axialen Zuführung des zu applizierenden Beschichtungsmittels,
b) eine ringförmig umlaufende Absprühkante (9) an dem Grundkörper (3) zum Absprühen des zerstäubten Beschichtungsmittels von der Absprühkante (9),
c) eine stirnseitige Überströmfläche (8) an dem Grundkörper (3), die von der Mittelbohrung (7) nach außen zu der Absprühkante (9) verläuft,
d) eine Verteilerscheibe (4), die das axial und mittig zugeführte Beschichtungsmittel mindestens teilweise radial nach außen auf die Überströmfläche (8) und zu der Absprühkante (9) ablenkt, und/oder
e) eine Verteilerscheibenaufnahme (5), die in dem Grundkörper (3) montiert ist, wobei die Verteilerscheibe (4) an der Verteilerscheibenaufnahme (5) montiert ist.

3. Glockenteller (1) nach Anspruch 2, **dadurch gekennzeichnet,**
a) **dass** die Verteilerscheibe (4) und/oder die Verteilerscheibenaufnahme (5) den Transponder (13; 19) stirnseitig abdeckt, um den Transponder (13; 19) vor Verschmutzungen durch das Beschichtungsmittel zu schützen, und/oder
b) **dass** die Verteilerscheibe (4) und/oder die Verteilerscheibenaufnahme (5) aus Kunststoff besteht, um den Transponder (13; 19) nicht elektromagnetisch abzuschirmen, und/oder
c) **dass** der Transponder (19 radial außerhalb der Verteilerscheibenaufnahme (5) angeordnet ist.

4. Glockenteller (1) nach einem der vorhergehenden Ansprüche, **dadurch gekennzeichnet,**
a) das in dem Grundkörper (3) des Glockentellers (1) stirnseitig ein Ringraum (14) angeordnet ist, insbesondere eine Ringnut (14), wobei der Ringraum (14) optional radial außerhalb der Verteilerscheibenaufnahme (5) verläuft, und
b) dass der Transponder (13; 19) in dem Ringraum (14) angeordnet ist.

5. Glockenteller (1) nach einem der vorhergehenden Ansprüche, **dadurch gekennzeichnet,**
a) **dass** der Transponder (13; 19) eine Antenne (20) aufweist, die vorzugsweise in dem Ringraum (14) des Glockentellers (1) angeordnet ist,
b) **dass** die Antenne (20) vorzugsweise wie folgt ausgebildet ist:
b1) als geschlossener Ring,
b2) als Dipol mit einem oder zwei Schenkeln,
b3) mit mehreren Kreissegmenten,
b4) geradlinig oder
b5) mäanderförmig, und/oder
c) **dass** die Antenne (20) wie folgt arbeitet:
c1) induktiv oder
c2) mit elektromagnetischen Wellen.

6. Glockenteller (1) nach Anspruch 5, **dadurch gekennzeichnet,**
a) **dass** der Transponder (13; 19) mit der ringförmigen Antenne (20) in einen Kunststoffring (22) eingebettet ist, insbesondere eingegossen,
b) **dass** der Kunststoffring (22) in dem Ringraum (14) des Glockentellers (1) angeordnet ist, insbesondere eingepresst, und
c) **dass** der Kunststoffring (22) vorzugsweise bezüglich seiner Symmetrieachse ausgewuchtet ist, und
d) **dass** die Symmetrieachse des Kunststoffrings (22) vorzugsweise koaxial zur Rotationsachse (2) des Glockentellers (1) verläuft.

7. Glockenteller (1) nach Anspruch 6, **dadurch gekennzeichnet,**
a) **dass** der Kunststoffring (22) aus zwei Teilen besteht, und/oder
b) **dass** die Antenne (20) und ein IC-Chip (21) in jeweils einem der beiden Teile des Kunststoffrings (22) angeordnet sind, und/oder
c) **dass** der IC-Chip (21) stirnseitig in dem Grundkörper (3) des Glockentellers (1) angeordnet ist, und/oder
d) **dass** einer der Teile des Kunststoffrings (22) in einen Unterlegring (15) eingepresst ist, und/oder
e) **dass** der Teil des Kunststoffrings (22) mit der eingebetteten Antenne (20) in eine ringförmige Aufnahme in der Verteilerscheibenaufnahme (5) eingepresst ist, und/oder
f) **dass** der Transponder (19) zwei verschiedene Kommunikationsfrequenzen zur drahtlosen Datenübertragung aufweist, insbesondere im UHF-Bereich und im NFC-Bereich, und/oder
g) **dass** der Transponder (19) mindestens zwei IC-Chips (21.2, 21.2) enthält, wobei die einzelnen IC-Chips (21.1, 21.2)
g1) optional jeweils eine Antenne (20.1, 20.2) haben, und
g2) optional unabhängige Informationen enthalten, und/oder
h) **dass** zusätzlich mindestens eine weitere Antenne in die Verteilerscheibe eingebettet ist, die mit der Antenne des Transponders gekoppelt ist.

8. Glockenteller (1) nach einem der Ansprüche 5 bis 7, **dadurch gekennzeichnet**
a) **dass** die ringförmige Antenne in die Ringnut (14) in dem Glockenteller (1) eingelegt ist,
b) **dass** in die Ringnut (14) in dem Glockenteller (1) ein Unterlegring (15) eingelegt ist, der sich mindestens teilweise zwischen dem Nutboden der Ringnut (14) und dem Transponder (13) befindet,
c) **dass** der Transponder (13) mit dem Unterlegring (15) in der Ringnut (14) mit einer Vergussmasse vergossen ist,
d) **dass** die Vergussmasse nicht-metallisch ist, um den Transponder (13) nicht abzuschirmen, und/oder
e) **dass** der Unterlegring (15) im Querschnitt im Wesentlichen L-förmig ist,
e1) wobei sich ein erster radialer Schenkel (16) des Unterlegrings (15) vorzugsweise zwischen dem Transponder (13) und dem Nutboden der Ringnut (14) befindet,
e2) während sich ein zweiter axialer Schenkel (17) des Unterlegrings (15) vorzugsweise zwischen dem Transponder (13) und einer radial innen liegenden Nutflanke der Ringnut (14) befindet.

9. Glockenteller (1) nach einem der Ansprüche 2 bis 8, **dadurch gekennzeichnet,**
a) **dass** die Verteilerscheibenaufnahme (5) die stirnseitig offene Ringnut (14) stirnseitig dichtend abschließt, und/oder
b) **dass** zur Abdichtung der Ringnut (14) ein Dichtring (18) vorgesehen ist, und/oder
c) **dass** der Dichtring (18) in einer ringförmigen Dichtungsnut in der Verteilerscheibenaufnahme (5) angeordnet ist und dichtend an dem Grundkörper (3) des Glockentellers (1) anliegt.

10. Glockenteller (1) nach einem der vorhergehenden Ansprüche, **dadurch gekennzeichnet,**
a) **dass** der Ringraum (14) koaxial zu der Rotationsachse (2) des Glockentellers (1) verläuft, und/oder
b) **dass** die Ringnut (14) kreisringförmig ist, und/oder
c) **dass** die Ringnut (14) zur Stirnseite des Glockentellers (1) hin offen ist, und/oder
d) **dass** der Transponder (13; 19) ein aktiver Transponder (13; 19) mit eigener Stromversorgung oder ein passiver Transponder (13; 19) ohne eigene Stromversorgung ist, und/oder
e) **dass** der Transponder (13; 19) ein RFID-Transponder (13; 19) ist, der bei einer Abfrage einen Identifikationscode ausgibt, und/oder
f) **dass** der Transponder (13; 19) eine auslesbare Identifikationskennung enthält, die den Glockenteller (1) identifiziert, und/oder
g) **dass** der Transponder einen Schreibspeicher aufweist.

11. Rotationszerstäuber mit einem Glockenteller (1) nach einem der vorhergehenden Ansprüche.

12. Rotationszerstäuber nach Anspruch 11, **dadurch gekennzeichnet, dass** mindestens eine der folgenden Komponenten des Rotationszerstäubers mit einem Transponder (13; 19) versehen ist:
a) Gehäuse (32) des Rotationszerstäubers,
b) Lenkluftring (33) zur Abgabe eines Lenkluftstrahls auf den Sprühstrahls des Beschichtungsmittels,
c) Turbine (34) zum Antrieb des Rotationszerstäubers,
d) Farbrohr (35),
e) Hauptnadelventil (36), das die Beschichtungsmittelabgabe steuert,
f) Ventile (37) in dem Rotationszerstäuber,
g) Ventilblock (38) in dem Rotationszerstäuber,
h) Anschlussflansch (39) des Rotationszerstäubers.

13. Lackierroboter mit einem Rotationszerstäuber nach Anspruch 12, **dadurch gekennzeichnet, dass** mindestens eine der folgenden Komponenten des Lackierroboters mit einem Transponder (13; 19) versehen ist:
a) Farbdruckregler (41),
b) Dosierpumpe (42),
c) Ventilblock (43),
d) Ventile (44),
e) Farbwechsler (45),
f) Roboterhandachse (46).

14. Betriebsverfahren für eine Lackieranlage mit einem Lackierroboter, insbesondere einem Lackierroboter gemäß Anspruch 13, der einen Rotationszerstäuber führt, mit dem folgenden Schritt:
a) Auslesen eines Transponders (13; 19) an dem Lackierroboter und/oder an dem Rotationszerstäuber durch ein Transponder-Lesegerät (31),
b) wobei der Lackierroboter den Rotationszerstäuber zum Auslesen des Transponders (13; 19) in eine Reinigungsstellung in oder an einem Zerstäuber-Reinigungsgerät (23) positioniert, wobei das Zerstäuber-Reinigungsgerät (23) die Antenne (26) des Transponder-Lesegeräts (31) aufweist,
**dadurch gekennzeichnet,**
c) dass der Rotationszerstäuber nach Anspruch 11 ausgebildet ist.

15. Betriebsverfahren nach Anspruch 14,
**dadurch gekennzeichnet,**
a) **dass** der Lackierroboter in einer Lackierkabine angeordnet ist,
b) **dass** die Lackierkabine einen Begehschutz aufweist, der im aktivierten Zustand einen Personenzugang zu der Lackierkabine verhindert und den Personenzugang zu der Lackierkabine nur im deaktivierten Zustand ermöglicht, und
c) **dass** der Transponder (13; 19) ausgelesen wird, nachdem der Begehschutz deaktiviert wurde, insbesondere nach dem erneuten Aktivieren des Begehschutzes.

16. Betriebsverfahren nach einem der Ansprüche 14 oder 15, **dadurch gekennzeichnet,**
a) **dass** die Lackieranlage einen Automatik-Modus aufweist, in dem der Lackierroboter programmgesteuert automatisch Bauteile lackiert, insbesondere Kraftfahrzeugkarosseriebauteile, und/oder
b) **dass** die Lackieranlage einen Reinigungs-Modus aufweist, in dem der Rotationszerstäuber gereinigt wird, und/oder
c) **dass** die Lackieranlage einen Wartungs-Modus aufweist, in dem die Lackieranlage gewartet wird, und/oder
d) **dass** die Lackieranlage einen Handbetriebs-Modus aufweist, in dem ein Handbetrieb erfolgt,
e) **dass** der an dem Lackierroboter oder an dem Rotationszerstäuber befindliche Transponder (13; 19) ausgelesen wird, wenn die Lackieranlage
e1) aus dem Reinigungs-Modus in den Automatik-Modus wechselt,
e2) aus dem Wartungs-Modus in den Automatik-Modus wechselt, und/oder
e3) aus dem Handbetriebs-Modus in den Automatik-Modus wechselt.

17. Betriebsverfahren nach einem der Ansprüche 14 bis 16, **dadurch gekennzeichnet,**
a) **dass** die Lackieranlage in einem Automatik-Modus betrieben wird, in dem der Lackierroboter in einer Lackierkabine programmgesteuert automatisch Bauteile lackiert, insbesondere Kraftfahrzeugkarosseriebauteile, und
b) **dass** die Lackieranlage in dem Automatik-Modus überprüft, ob eines der folgenden Trigger-Ereignisse eintritt:
b1) Aktivierung eines Not-Aus, insbesondere durch manuelles Betätigen eines Not-Aus-schalters,
b2) Erfassung eines Personenzutritts in die Lackierkabine,
b3) Deaktivierung eines Begehschutzes, der im aktivierten Zustand einen Personenzugang zu der Lackierkabine verhindert und den Personenzugang zu der Lackierkabine nur im deaktivierten Zustand ermöglicht, und
c) Auslesen des an dem Lackierroboter oder an dem Rotationszerstäuber befindlichen Transponders (13; 19), wenn in dem Automatik-Modus eines der Trigger-Ereignisse detektiert wurde, wobei der Transponder (13; 19) vorzugsweise erst dann ausgelesen wird, wenn
c1) die Lackieranlage das nächste Mal in den Automatik-Modus wechselt, oder
c2) ein teilweise lackiertes Lackiermodul auf der Bauteiloberfläche des zu beschichtenden Bauteils fertig lackiert wurde,
c3) das aktuell lackierte Bauteile fertig lackiert wurde.

## Claims

1. Bell plate (1) for a rotary atomizer for applying a coating agent, in particular for painting motor vehicle body components in a painting installation, having
a) a base body (3), in particular made of metal, and
b) a transponder (13; 19) which can be read out wirelessly and is integrated in the bell plate (1), **characterized in**
c) **that** the transponder (13; 19) is arranged in the base body (3) on the front side or is embedded into the outer outer circumferential surface (12) of the bell plate (1).

2. Bell plate (1) according to claim 1, **characterized by**
a) an axially extending central bore (7) in the base body (3) for the passage of a paint nozzle for the axial supply of the coating agent to be applied,
b) an annular spray-off edge (9) on the base body (3) for spraying off the atomized coating agent from the spray-off edge (9),
c) a frontal overflow surface (8) on the base body (3) extending outwardly from the central bore (7) to the spray-off edge (9),
d) a distributor disc (4) which deflects the axially and centrally supplied coating agent at least partially radially outwardly onto the overflow surface (8) and to the spray-off edge (9), and/or
e) a distributor disc receptacle (5) mounted in the base body (3), the distributor disc (4) being mounted on the distributor disc receptacle (5).

3. Bell plate (1) according to claim 2, **characterized in**
a) **that** the distributor disc (4) and/or the distributor disc receptacle (5) covers the transponder (13; 19) on the front face in order to protect the transponder (13; 19) from contamination by the coating agent, and/or
b) **that** the distributor disc (4) and/or the distributor disc holder (5) is made of plastic so as not to electromagnetically shield the transponder (13; 19), and/or
c) **that** the transponder (19) is arranged radially outside the distributor disc holder (5).

4. Bell plate (1) according to one of the preceding claims, **characterized in**
a) **that** an annular space (14), in particular an annular groove (14), is arranged in the base body (3) of the bell plate (1) on the front face, the annular space (14) optionally running radially outside the distributor disc holder (5), and
b) **that** the transponder (13; 19) is arranged in the annular space (14).

5. Bell plate (1) according to one of the preceding claims, **characterized in**
a) **that** the transponder (13; 19) has an antenna (20) which is preferably arranged in the annular space (14) of the bell plate (1),
b) **that** the antenna (20) is preferably designed as follows:
b1) as a closed ring,
b2) as a dipole with one or two legs,
b3) with several circular segments,
b4) rectilinear or
b5) meander-shaped, and/or
c) **that** the antenna (20) operates as follows:
c1) inductively or
c2) with electromagnetic waves.

6. Bell plate (1) according to claim 5, **characterized in**
a) **that** the transponder (13; 19) with the annular antenna (20) is embedded, in particular cast, in a plastic ring (22),
b) **that** the plastic ring (22) is arranged in the annular space (14) of the bell plate (1), in particular pressed in, and
c) **that** the plastic ring (22) is preferably balanced with respect to its axis of symmetry, and
d) **that** the axis of symmetry of the plastic ring (22) preferably runs coaxially with the axis of rotation (2) of the bell plate (1).

7. Bell plate (1) according to claim 6, **characterized in**
a) **that** the plastic ring (22) consists of two parts, and/or
b) **that** the antenna (20) and an IC chip (21) are each arranged in one of the two parts of the plastic ring (22), and/or
c) **that** the IC chip (21) is arranged on the front face in the base body (3) of the bell plate (1), and/or
d) **that** one of the parts of the plastic ring (22) is pressed into a washer (15), and/or
e) **that** the part of the plastic ring (22) with the embedded antenna (20) is pressed into an annular receptacle in the distributor disc receptacle (5), and/or
f) **that** the transponder (19) has two different communication frequencies for wireless data transmission, in particular in the UHF range and in the NFC range, and/or
g) **that** the transponder (19) contains at least two IC chips (21.2, 21.2), with the individual IC chips (21.1, 21.2)
g1) optionally each have an antenna (20.1, 20.2), and
g2) optionally contain independent information, and/or
h) **that** additionally at least one further antenna is embedded in the distributor disc, which is coupled to the antenna of the transponder.

8. Bell plate (1) according to any one of claims 5 to 7, **characterized in**
a) **that** the annular antenna is inserted into the annular groove (14) in the bell plate (1),
b) **that** a washer (15) is inserted into the annular groove (14) in the bell plate (1), which washer (15) is located at least partially between the groove bottom of the annular groove (14) and the transponder (13),
c) **that** the transponder (13) is cast with the washer (15) in the annular groove (14) with a casting compound,
d) **that** the casting compound is non-metallic so as not to shield the transponder (13), and/or
e) **that** the washer (15) is substantially L-shaped in cross-section,
e1) while a first radial leg (16) of the washer (15) is preferably located between the transponder (13) and the groove bottom of the annular groove (14)
e2) while a second axial leg (17) of the washer (15) is preferably located between the transponder (13) and a radially inner groove flank of the annular groove (14).

9. Bell plate (1) according to one of the claims 2 to 8, **characterized in**
a) **that** the distributor disc holder (5) closes off the annular groove (14), which is open at the front face, in a sealing manner at the front face, and/or
b) **that** a sealing ring (18) is provided for sealing the annular groove (14), and/or
c) **that** the sealing ring (18) is arranged in an annular sealing groove in the distributor disc holder (5) and bears in a sealing manner against the base body (3) of the bell plate (1).

10. Bell plate (1) according to one of the preceding claims, **characterized in**
a) **that** the annular groove (14) runs coaxially with the axis of rotation (2) of the bell plate (1), and/or
b) **that** the annular groove (14) is annular, and/or
c) **that** the annular groove (14) is open towards the front face of the bell plate (1), and/or
d) **that** the transponder (13; 19) is an active transponder (13; 19) with its own power supply or a passive transponder (13; 19) without its own power supply, and/or
e) **that** the transponder (13; 19) is an RFID transponder (13; 19) which outputs an identification code when interrogated, and/or
f) **that** the transponder (13; 19) contains a readable identification code which identifies the bell plate (1), and/or
g) **that** the transponder has a write memory.

11. Rotary atomizer with a bell plate (1) according to any of the preceding claims.

12. Rotary atomizer according to claim 11, **characterized in that** at least one of the following components of the rotary atomizer is provided with a transponder (13; 19):
a) Housing (32) of the rotary atomizer,
b) shaping air ring (33) for emitting a shaping air jet onto the spray of the coating agent,
c) turbine (34) for driving the rotary atomizer,
d) paint tube (35),
e) main needle valve (36) controlling the coating agent delivery,
f) valves (37) in the rotary atomizer,
g) valve block (38) in the rotary atomizer,
h) connecting flange (39) of the rotary atomizer.

13. Painting robot with a rotary atomizer according to claim 12, **characterized in that** at least one of the following components of the painting robot is provided with a trans-ponder (13; 19):
a) Paint pressure regulator (41),
b) metering pump (42),
c) valve block (43),
d) valves (44),
e) color changer (45),
f) robot hand axis (46).

14. Operating method for a painting installation with a painting robot, in particular a painting robot according to claim 13, which guides a rotary atomizer, comprising the following step:
a) reading a transponder (13; 19) on the painting robot and/or on the rotary atomizer by a transponder reader (31),
b) wherein the painting robot positions the rotary atomizer for reading the transponder (13; 19) in a cleaning position in or at an atomizer cleaning device (23), wherein the atomizer cleaning device (23) comprises the antenna (26) of the transponder reader (31),
**characterized in**
c) that the rotary atomizer is designed according to claim 11.

15. Operating method according to claim 14, **characterized in**
a) **that** the painting robot is arranged in a painting booth,
b) **that** the painting booth has an access protection system which, in the activated state, prevents access by persons to the painting booth and permits access by persons to the painting booth only in the deactivated state, and
c) **that** the transponder (13; 19) is read out after the access protection system has been deactivated, in particular after the access protection system has been reactivated.

16. Operating method according to one of claims 14 or 15, **characterized in**
a) **that** the painting installation has an automatic mode in which the painting robot automatically paints components under program control, in particular motor vehicle body components, and/or
b) **that** the painting installation has a cleaning mode in which the rotary atomizer is cleaned, and/or
c) **that** the painting installation has a maintenance mode in which the painting installation is maintained, and/or
d) **that** the coating system has a manual operation mode in which manual operation takes place,
e) **that** the transponder (13; 19) located on the painting robot or on the rotary atomizer is read out when the paint shop
e1) changes from the cleaning mode to the automatic mode,
e2) changes from maintenance mode to automatic mode, and/or
e3) changes from the manual operation mode to the automatic mode.

17. Operating method according to any one of claims 14 to 16, **characterized in**
a) **that** the painting installation is operated in an automatic mode in which the painting robot automatically paints components, in particular motor vehicle body components, in a painting booth under program control, and
b) **that** the painting installation checks in the automatic mode whether one of the following trigger events occurs:
b1) Activation of an emergency stop, in particular by manual actuation of an emergency stop switch,
b2) detection of a person entering the paint booth,
b3) deactivation of an access protection system which, in the activated state, prevents access to the paint booth by persons and permits access to the paint booth by persons only in the deactivated state, and
c) reading-out of the transponder (13; 19) located on the painting robot or on the rotary atomizer when one of the trigger events has been detected in the automatic mode, the transponder (13; 19) preferably only being read when
c1) the painting installation changes to the automatic mode for the next time, or
c2) a partially painted painting module has been finished on the component surface of the component to be coated,
c3) the currently painted component has been finished.

## Revendications

1. Plateau à cloche (1) pour un pulvérisateur rotatif pour l'application d'un produit de revêtement, plus particulièrement pour la peinture de composants de carrosseries de véhicules automobiles dans une installation de peinture, avec
a) un corps de base (3), plus particulièrement en métal et
b) un transpondeur (13 ; 19) qui est intégré de manière lisible sans fil et dans le plateau à cloche (1),
**caractérisé en ce que**
c) le transpondeur (13 ; 19) est disposé côté frontal dans le corps de base (3) ou est intégré dans la surface d'enveloppe externe (12) du plateau à cloche (1).

2. Plateau à cloche (1) selon la revendication 1, **caractérisé par**
a) un alésage central (7) à extension axiale dans le corps de base (3) pour la réalisation d'une buse de couleur pour l'introduction axiale du produit de revêtement à appliquer,
b) un bord de pulvérisation (9) )à extension annulaire sur le corps de base (3), pour la pulvérisation du produit de revêtement pulvérisé à partir du bord de pulvérisation (9),
c) une surface de débordement (8) côté frontal sur le corps de base (3), qui s'étend de l'alésage central (7) vers l'extérieur en direction du bord de pulvérisation (9),
d) un disque répartiteur (4) qui dévie le produit de revêtement introduit de manière axiale et centrale au moins partiellement vers l'extérieur en direction de la surface de débordement (8) et du bord de pulvérisation (9) et/ou
e) un logement de disque répartiteur (5) qui est monté dans le corps de base (3), dans lequel le disque répartiteur (4) est monté sur le logement de disque répartiteur (5).

3. Plateau à cloche (1) selon la revendication 2, **caractérisé en ce que**
a) le disque répartiteur (4) et/ou le logement de disque répartiteur (5) recouvre le transpondeur (13 ; 19) côté frontal afin de protéger le transpondeur (13 ; 19) d'un encrassement par le produit de revêtement et/ou
b) le disque répartiteur (4) et/ou le logement de disque répartiteur (5) est constitué de matière plastique afin de ne pas blinder électromagnétiquement le transpondeur (13 ; 19) et/ou
c) le transpondeur (19) est disposé radialement vers l'extérieur du logement de disque répartiteur (5).

4. Plateau à cloche (1) selon l'une des revendications précédentes, **caractérisé en ce que**
a) dans le corps de base (3) du plateau à cloche (1), est disposé, côté frontal, un espace annulaire (14), plus particulièrement une rainure annulaire (14), dans lequel 'espace annulaire (14) s'étend, de manière optionnelle, radialement à l'extérieur du logement de disque répartiteur (5) et
b) le transpondeur (13 ; 19) est disposé dans l'espace annulaire (14).

5. Plateau à cloche (1) selon l'une des revendications précédentes, **caractérisé en ce que**
a) le transpondeur (13 ; 19) comprend une antenne (20) qui est disposée de préférence dans l'espace annulaire (14) du plateau à cloche (1),
b) l'antenne (20) est conçue de préférence comme suit :
b1) comme un anneau fermé,
b2) comme un dipôle avec une ou deux branches,
b3) avec plusieurs secteurs circulaires,
b4) en ligne droite ou
b5) avec une forme sinueuse et/ou
c) l'antenne (20) fonctionne comme suit :
c1) de manière inductive ou
c2) avec des ondes électromagnétiques.

6. Plateau à cloche (1) selon la revendication 5, **caractérisé en ce que**
a) le transpondeur (13 ; 19) avec l'antenne annulaire (20) est intégré, plus particulièrement coulé, dans un anneau en matière plastique (22),
b) l'anneau en matière plastique (22) est disposé, plus particulièrement enfoncé, dans l'espace annulaire (14) du plateau à cloche (1),
c) l'anneau en matière plastique (22) est équilibré de préférence par rapport à son axe de symétrie et
d) l'axe de symétrie de l'anneau en matière plastique (22) s'étend de préférence de manière coaxiale par rapport à l'axe de rotation (2) du plateau à cloche (1).

7. Plateau à cloche (1) selon la revendication 6, **caractérisé en ce que**
a) l'anneau en matière plastique (22) est constitué de deux parties et/ou
b) l'antenne (20) et une puce de circuit intégré (21) sont disposés respectivement dans une des deux parties de l'anneau en matière plastique (22) et/ou
c) la puce de circuit intégré (21) est disposée, côté frontal, dans le corps de base (3) du plateau à cloche (1) et/ou
d) une des parties de l'anneau en matière plastique (22) est enfoncée dans un anneau inférieur (15) et/ou
e) la partie de l'anneau en matière plastique (22) avec l'antenne (20) intégrée est enfoncée dans un logement annulaire dans le logement de disque répartiteur (5) et/ou
f) le transpondeur (19) présente deux fréquences de communication différentes pour une transmission de données sans fil, plus particulièrement dans la bande UHF et dans la bande NFC et/ou
g) le transpondeur (19) contient au moins deux puces de circuit intégré (21.2, 21.2), dans lequel les différentes puces de circuit intégré (21.1, 21.2)
g1) comprennent, en option, respectivement une antenne (20.1, 20.2) et
g2) contiennent, en option, des informations indépendantes et/ou
h) en outre, au moins une autre antenne est intégrée dans le disque répartiteur, cette antenne étant couplée avec l'antenne du transpondeur.

8. Plateau à cloche (1) selon l'une des revendications 5 à 7, **caractérisé en ce que**
a) l'antenne annulaire est insérée dans la rainure annulaire (14) dans le plateau à cloche (1),
b) dans la rainure annulaire (14) dans le plateau à cloche (1), est insérée un anneau inférieur (15) qui se trouve au moins partiellement entre le fond de la rainure annulaire (14) et le transpondeur (13),
c) le transpondeur (13) avec l'anneau inférieur (15) est coulé dans la rainure annulaire (14) avec une masse de scellement,
d) la masse de scellement n'est pas métallique, afin de ne pas blinder le transpondeur (13) et/ou
e) l'anneau inférieur (15) présente une section transversale globalement en forme de L,
e1) dans lequel une première branche radiale (16) de l'anneau inférieur (15) se trouve de préférence entre le transpondeur (13) et le fond de la rainure annulaire (14),
e2) tandis qu'une deuxième branche axiale (17) de l'anneau inférieur (15) se trouve de préférence entre le transpondeur (13) et un flanc radial interne de la rainure annulaire (14).

9. Plateau à cloche (1) selon l'une des revendications 2 à 8, **caractérisé en ce que**
a) le logement de disque répartiteur (5) obture de manière étanche la rainure annulaire (14) ouverte côté frontal et/ou
b) pour l'étanchéification de la rainure annulaire (14), une bague d'étanchéité (18) est prévue et/ou
c) la bague d'étanchéité (18) est disposée dans une rainure d'étanchéité annulaire dans le logement de disque répartiteur (5) et s'appuie de manière étanche contre le corps de base (3) du plateau à cloche (1).

10. Plateau à cloche (1) selon l'une des revendications précédentes, **caractérisé en ce que**
a) l'espace annulaire (14) s'étend de manière coaxiale par rapport à l'axe de rotation (12) du plateau à cloche (1) et/ou
b) la rainure annulaire (14) est circulaire et/ou
c) la rainure annulaire (14) est ouverte en direction de la face frontale du plateau à cloche (1) et/ou
d) le transpondeur (13 ; 19) est un transpondeur actif (13 ; 19) avec sa propre alimentation électrique ou un transpondeur passif (13 ; 19) sans alimentation électrique propre et/ou
e) le transpondeur (13 ; 19) est un transpondeur RFID (13 ; 19) qui, lorsqu'il est interrogé, émet un code d'identification et/ou
f) le transpondeur (13 ; 19) contient une caractéristique d'identification qui identifier le plateau à cloche (1) et/ou
g) le transpondeur comprend une mémoire inscriptible.

11. Pulvérisateur rotatif avec un plateau à cloche (1) selon l'une des revendications précédentes.

12. Pulvérisateur rotatif selon la revendication 11, **caractérisé en ce qu'**au moins un des composants suivants du pulvérisateur rotatif est muni d'un transpondeur (13 ; 19) :
a) boîtier (32) du pulvérisateur rotatif,
b) bague d'air de guidage (33) pour l'émission d'un jet d'air de guidage vers le jet de pulvérisation du produit de revêtement,
c) turbine (34) pour l'entraînement du pulvérisateur rotatif,
d) tube de couleur (35),
e) vanne à pointeau principale (36) qui contrôle la distribution du produit de revêtement,
f) vannes (37) dans le pulvérisateur rotatif,
g) bloc de vannes (38) dans le pulvérisateur rotatif,
h) bride de raccordement (39) du pulvérisateur rotatif.

13. Robot de peinture avec un pulvérisateur rotatif selon la revendication 12, **caractérisé en ce qu'**au moins un des composants suivants du robot de peinture est muni d'un transpondeur (13 ; 19) :
a) régulateur de pression de peinture (41),
b) pompe de dosage (42),
c) bloc de vannes (43),
d) vannes (44),
e) changeur de couleur (45),
f) axe de main de robot (46).

14. Procédé de fonctionnement pour une installation de peinture avec un robot de peinture, plus particulièrement un robot de peinture selon la revendication 13, qui guide un pulvérisateur rotatif, avec l'étape suivante :
a) lecture d'un transpondeur (13 ; 19) sur le robot de peinture et/ou sur le pulvérisateur rotatif à l'aide d'un appareil de lecture de transpondeur (31),
b) dans lequel le robot de peinture positionne le pulvérisateur rotatif, pour la lecture du transpondeur (13 ; 19), dans une position de nettoyage dans ou sur un appareil de nettoyage de pulvérisateur (23), dans lequel l'appareil de nettoyage de pulvérisateur (23) comprend l'antenne (26) de l'appareil de lecture de transpondeur (31), **caractérisé en ce que**
c) le pulvérisateur rotatif est conçu selon la revendication 11.

15. Procédé de fonctionnement selon la revendication 14,
**caractérisé en ce que**
a) le robot de peinture est disposé dans une cabine de peinture,
b) la cabine de peinture comprend une protection d'accès qui, dans l'état activé, empêche l'accès des personnes à la cabine de peinture et qui permet l'accès des personnes à la cabine de peinture uniquement dans l'état désactivé et
c) le transpondeur (13 ; 19) est lu après que la protection d'accès a été désactivée, plus particulièrement après une nouvelle activation de la protection d'accès.

16. Procédé de fonctionnement selon la revendication 14 ou 15, **caractérisé en ce que**
a) l'installation de peinture présente un mode automatique dans lequel le robot de peinture peint automatiquement des composants, plus particulièrement des composants de carrosseries de véhicules automobiles, de manière contrôlée par un programme et/ou
b) l'installation de peint présente un mode de nettoyage dans lequel le pulvérisateur rotatif est nettoyé et/ou
c) l'installation de peinture présente un mode de maintenance dans lequel l'installation de peinture est entretenue et/ou
d) l'installation de peint présente un mode de fonctionnement manuel dans lequel un fonctionnement manuel est possible,
e) le transpondeur (13 ; 19) se trouvant sur le robot de peinture ou sur le pulvérisateur rotatif est lu lorsque l'installation de peinture
e1) passe du mode de nettoyage au mode automatique,
e2) passe du mode de maintenance au mode automatique et/ou
e3) passe du mode de fonctionnement manuel au mode automatique.

17. Procédé de fonctionnement selon l'une des revendications 14 à 16, **caractérisé en ce que**
a) l'installation de peinture fonctionne dans un mode automatique dans lequel le robot de peinture peint automatiquement, dans une cabine de peinture, des composants, plus particulièrement des composants de carrosseries de véhicules automobiles, de manière contrôlée par un programme et
b) l'installation de peinture vérifie, dans le mode automatique, si un des événements déclencheurs suivants survient :
b1) activation d'un arrêt d'urgence, plus particulièrement par l'actionnement manuel d'un interrupteur d'arrêt d'urgence,
b2) détection de l'entrée d'une personne dans la cabine de peinture,
b3) désactivation d'une protection d'accès qui, dans l'état activé, empêche l'accès des personnes à la cabine de peinture et qui permet l'accès des personnes à la cabine de peinture uniquement dans l'état désactivé et
c) lecture du transpondeur (13 ; 19) se trouvant sur le robot de peinture ou sur le pulvérisateur rotatif lorsque, dans le mode automatique, un des événements déclencheurs a été détecté, dans lequel le transpondeur (13 ; 19) n'est lu de préférence que lorsque
c1) l'installation de peinture passe la fois suivante en mode automatique ou
c2) un module de peinture partiellement peint a été peint entièrement sur la surface du composant à revêtir,
c3) le composant en cours de peinture a été entièrement peint.
